# EUROPEAN PATENT APPLICATION

(11) **EP 4 649 798 A1**
(43) Date of publication of application: **19.11.2025**
(21) Application number: 25167873.6
(22) Date of filing: 01.04.2025
(51) Int. Cl.: A01B 73/02, A01B 73/04, A01B 73/06

(54) **AGRICULTURAL IMPLEMENT**

(30) Priority: 14.05.2024 US 202418663628
(71) Applicant: Deere & Company, Moline, IL 61265 (US)
(72) Inventor: SOTO LOZANO, CARLOS ALBERTO, 68163 Mannheim (DE); KROTH, ROGERIO L, 68163 Mannheim (DE); JIMENEZ, ALVARO EMMANUEL, 68163 Mannheim (DE)
(74) Representative: Reichert, Christian

(57) **Abstract**

An agricultural implement (100, 300) is disclosed. The agricultural implement (100, 300) comprising: a main frame (320, 818); a wing frame section (322, 324, 816) pivotally coupled to the main frame (320, 818) about a main frame axis (810) and configured to move between an operational position and a stowed position; wherein the wing frame section (322, 324, 816) is configured to move upwardly and inwardly about the axis (810) and relative to the main frame (320, 818) when moving from the operational position to the stowed position.

## Description

### FIELD OF THE DISCLOSURE

The present disclosure generally relates to frame sections of agricultural implements, and, more specifically, to wing assemblies of agricultural implements with an angled pivot allowing the agricultural implement to be oriented in a narrow transportation configuration.

### BACKGROUND

Certain agricultural implements, including, for example, planters and air-seeders, among others, are often divided into sections across the width of the implement. For example, with respect to planters that utilize row units that plant seed into soil, the planters are often divided into sections. Such sections can include a center frame and one or more other sections on opposing sides of the center frame, which are often referred to as wings or wing frames. Agricultural implements such as planters often have a relatively wide width and can thus extend across a relatively wide area of a field. However, during transportation, when the row units or other agricultural implements are not operating in the field but are moving from one location to another, the row units or other agricultural implements may either be loaded onto a trailer, which may be time consuming and laborious, or may be narrowed. However conventional narrowing systems and methods include complex routing and hydraulic hardware. Accordingly, it would be desirable to have systems and/or methods to narrow row units or other agricultural implements by lifting and folding the wing frames without complex routing and hydraulic hardware.

### SUMMARY

The present disclosure may comprise one or more of the following features and combinations thereof.

One embodiment is an agricultural implement that has a main frame, a wing frame section pivotally coupled to the main frame about a main frame axis and configured to move between an operational position and a stowed position. The wing frame section is configured to move upwardly and inwardly about the main frame axis and relative to the main frame when moving from the operational position to the stowed position.

One example of this embodiment has a coupling mechanism. The coupling mechanism is coupled to the main frame and the wing frame section, and the coupling mechanism is pivotally coupled to the main frame to selectively pivot about the main frame axis relative to the main frame. One part of this example includes an actuator coupled to the main frame on a first end and to the coupling mechanism on a second end, the actuator configured to move the wing frame section upwardly and inwardly relative to the main frame when the wing frame section transitions from the operational position to the stowed position. Further, the actuator is configured to move the wing frame section downwardly and outwardly relative to the main frame when the wing frame section transitions from the stowed position to the operational position.

**In** another example of this embodiment, the main frame axis is offset relative to the ground plane and a vertical plane.

**In** yet another example of this embodiment, a second wing frame section pivotally coupled to the main frame about a second main frame axis and configured to move between the operational and stowed position. The second wing frame section is configured to move upwardly and inwardly about the main frame axis and relative to the main frame when moving from the operational position to the stowed position.

**In** one part of this disclosure, the wing frame section is selectively transitionable between being moveably coupled to the coupling mechanism about a wing frame axis, and being fixedly coupled to the coupling mechanism. This example includes an arm configured to selectively couple the wing frame section to a first coupling section, the arm limiting movement of the wing frame section about the wing frame axis. The arm is coupled to the wing frame section via a first pin and a second pin and when both the first pin and second pin are coupled to the wing frame section, the wing frame section is prevented from moving about the wing frame axis. However, when the first pin is coupled to the wing frame section and the second pin is not coupled to the wing frame section, the wing frame is moveable about the wing frame axis a limited range.

**In** yet another example of this embodiment, the actuator is coupled to one or more of the main frame and the coupling mechanism via a ball joint.

Another example of this embodiment has a locking mechanism configured to transition between a locked position and an unlocked position. The locking mechanism locks the wing frame section in the stowed position when the wing frame section is in the stowed position and the locking mechanism is in the locked position. The wing assembly is moveable to the operational position when the wing frame section is in the stowed position and the locking mechanism is in the unlocked position.

Another embodiment of this disclosure is an agricultural implement having a coupling mechanism coupling a wing frame to a main frame. The coupling mechanism has a body with a first end and a second end, the first end configured to be coupled to the wing frame and a hole defined through at least a portion of the second end, the hole configured to be pivotably coupled to the main frame about an axis defined through the hole. The body is configured to pivot between a first position and a second position, the body pivoting upwardly and inwardly relative to the main frame when the body moves from the first position to the second position. One example of this embodiment has an actuator coupling section configured to be coupled to an actuator to move the body between the first position and second position about the axis. Another example of this embodiment has a first wing frame coupling section and a second wing frame coupling section, the first wing frame coupling section configured to be pivotally coupled to the wing frame, and the second wing frame coupling section configured to be selectively couplable to the wing frame. As part of this example, the second wing frame coupling section is configured to limit the wing frame from pivoting relative to the coupling mechanism when the second wing frame coupling section is coupled to the wing frame.

One example of this embodiment has an actuator coupling section configured to be coupled to an actuator via a ball joint. **In** another example the axis is defined between a horizontal plane and a vertical plane relative to the coupling mechanism. **In** yet another example, the body is configured to be selectively transitionable between a first coupling position and a second coupling position. The wing frame is moveably coupled to the coupling mechanism in the first coupling position and the wing frame is fixedly coupled to the coupling mechanism in the second coupling position.

Yet another embodiment of this disclosure is a method for assembling a wing frame section. The method includes pivotally coupling a wing frame to a main frame about a main frame axis such that the wing frame is pivotable between an operational position and a stowed position, wherein the wing frame rotates about the main frame axis in an inward and upward direction relative to a main frame when the wing frame moves from the operational position to the stowed position, and coupling an actuator to the wing frame section to selectively pivot the wing frame between the operational and stowed positions.

One example of this embodiment includes coupling a coupling mechanism between the wing frame and the main frame, the coupling mechanism being pivotable about the main frame axis with the actuator. The coupling mechanism configured to be selectively transitionable between being moveably coupled to the wing frame and fixedly coupled to the wing frame.

Yet another example of this embodiment includes providing a locking mechanism for selectively locking the wing frame section relative to the main frame when the wing frame section is in the stowed position.

These and other features of the present disclosure will become more apparent from the following description of the illustrative implementations.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings, wherein:
Fig. 1 is a top plan view of a conventional agricultural implement;
Fig. 2 is a perspective view of a wheel assembly of the implement of Fig. 1;
Fig. 3A is an overhead view of an agricultural implement having two wing frame sections coupled to a main frame, and the implement is in an operational position;
Fig. 3B is a rear view of an agricultural implement having two wing frame sections coupled to a main frame, and the implement is in an operational position;
Fig. 3C is a detailed rear perspective view of a portion of the two wing frame sections coupled to the main frame, and the implement is in an operational position;
Fig. 4 is an overhead view of the implement of Fig. 3A with the wing frame sections positioned between the operational position and a stowed position;
Fig. 5 is a rear view of the implement of Fig. 4 with the wing frame sections positioned between the operational position and stowed position;
Fig. 6 is an overhead view of the implement of Fig. 4 with both wing frame sections in the stowed position;
Fig. 7 is a rear view of the implement of Fig. 4 with both wing frame sections in the stowed position;
Fig. 8A is a rear perspective view of an angled wing joint;
Fig. 8B is a rear perspective view of the angled wing joint of Fig. 8A coupled to an actuator in an extended position, one of the wing frame sections in the operational position, and the main frame;
Fig. 8C is a rear perspective view of the angled wing joint of Fig. 8A coupled to the actuator in a partially extended position;
Fig. 8D is a rear perspective view of the angled wing joint of Fig. 8A coupled to the actuator in a retracted position;
Fig. 8E is a rear perspective view of a wing frame arm coupled to the angled wing joint and to one of the wing frame sections via a pin with the pin located in a first position;
Fig. 8F is a rear perspective view of the wing frame arm of Fig. 8E coupled to the angled wing joint and to one of the wing frame sections via a pin with the pin located in a second position;
Fig. 8G is a rear perspective view of the wing frame arm of Fig. 8E coupled to the angled wing joint and to one of the wing frame sections via a pin with the pin located in a third position;
Fig. 9 is a flow chart of a method for moving one or more wing frames from an operational position to a stowed position; and
Fig. 10 is a flow chart of a method for moving one or more wing frames from a stowed position to an operational position.

Corresponding reference numerals are used to indicate corresponding parts throughout the several views.

### DETAILED DESCRIPTION

The implementations of the present disclosure described below are not intended to be exhaustive or to limit the disclosure to the precise forms in the following detailed description. Rather, the implementations are chosen and described so that others skilled in the art may appreciate and understand the principles and practices of the present disclosure.

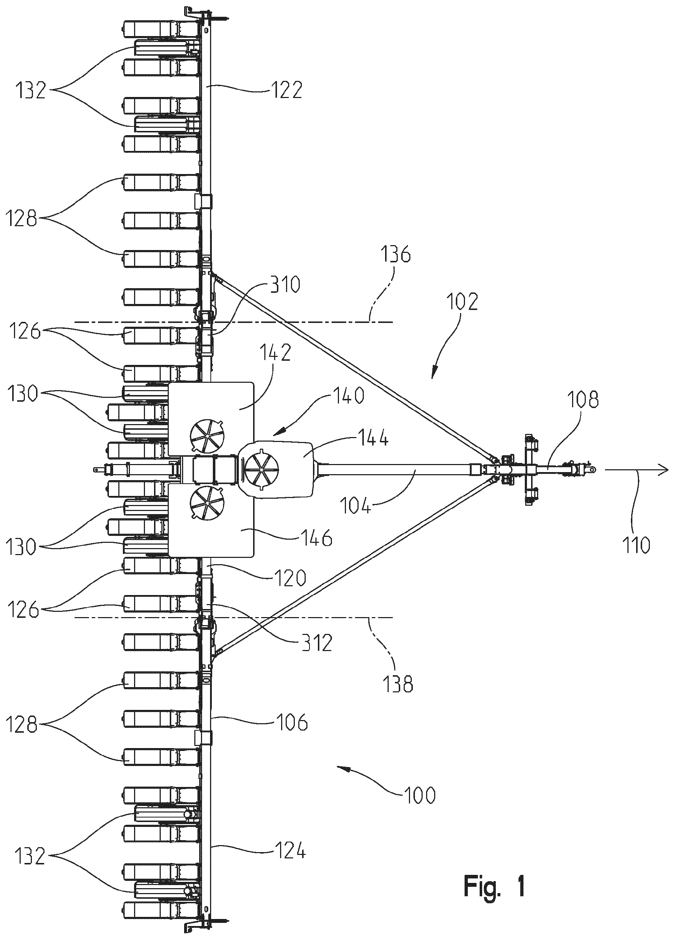

In Fig. 1 of the present disclosure, a first implementation of a conventional implement 100 is shown as a row crop planter. While row crop planters are illustrated, this disclosure may apply to any machine or implement that lifts and/or folds, such as, for example, planters, sprayers, fertilizers, and/or tillage machines. The implement 100 is illustrated including a frame 102 having a draw bar 104 and a tool bar 106 spanning a width thereof. At the forward end of the draw bar 104 is a tongue 108 for coupling the frame 102 to a towing vehicle such as a tractor (not shown). The tool bar 106 is shown having a main frame section 120, a first wing frame section 122, and a second wing frame section 124 extending laterally from the main frame section 120. During operation, the towing vehicle (not shown) may pull or tow the implement 100 in a forward direction 110, as shown in Fig. 1.

The first and second wing frame sections 122, 124 may be moveably coupled to the main frame section 120 for rotation about fore and aft extending axes 136 and 138. The moveable connection allows the wing sections to follow the ground contour as the implement 100 moves through a field. A first plurality of row units 126 may be carried by the main frame section 120 and function as main section ground engaging tools. A second plurality of row units 128 may be carried by the first and second wing frame sections 122, 124 and form wing ground engaging tools. In one aspect, the first and second plurality of row units 126 and 128 may be identical. In another aspect, the first and second plurality of row units 126, 128 may be different from one another.

The implement 100 may also include a product storage system 140 mounted to the main frame section 120. The product storage system 140 may include product bins or tanks, 142, 144 and 146, as shown in Fig. 1. The bins 142, 144, 146 may hold seed that is delivered pneumatically to mini hoppers on the row units. In other implementations (not shown), the bins 142, 144, 146 may hold dry or liquid fertilizer or water that is used to dilute a concentrated insecticide or other chemical to be applied.

Referring still to Fig. 1, the implement 100 is shown including main wheel assemblies 130 coupled to and supporting the main frame section 120 for movement over the ground. Moreover, wing wheel assemblies 132 are coupled to the first and second wing frame sections 122, 124 for supporting the wing frame sections for movement over the ground.

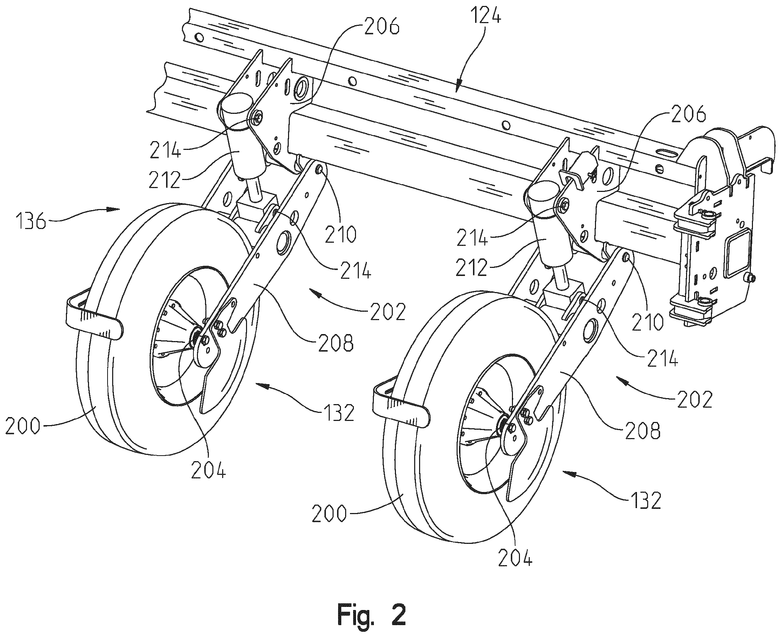

In Fig. 2, a pair of wing wheel assemblies 132 are shown coupled to the second wing frame section 124 (the same may be true of the first wing frame section 122). Each wing wheel assembly 132 may include a tire or wheel 200 mounted to a support structure 202 for rotation on an axle 204. The support structure 202 includes a mounting bracket 206 secured to the wing frame section 124 and a lift arm 208. The lift arm 208 may be pivotally connected to the bracket 206 by a pin 210.

The second wing frame section 124 may be raised or lowered by operation of one or more hydraulic cylinders 212 coupled between the lift arms 208 and mounting brackets 206 which are in turn secured to the wing frame section 124. Both the rod end and the base end of each cylinder 212 may be attached to the lift arms 208 and mounting brackets 206 by pins 214. The main wheel assemblies 130 may have similar components as the wing wheel assemblies 132, namely wheels or tires, lift arms and hydraulic cylinders. The main wheel assemblies 130 may have components sized to carry larger loads than the wing wheel assemblies.

The row unit 128 may include a row unit frame attached to the second wing frame section 124 by a linkage. The linkage may allow up and down movement of the row unit 128 relative to the tool bar 106 or second wing frame section 124 to follow ground contours. The row unit frame may support a double disc furrow opener for forming a seed furrow in the soil or ground. Gauge wheels may be provided on the sides of the two opener discs. The gauge wheels function as furrow depth regulation members, where each gauge wheel is respectively associated with one disc of double disc furrow opener 124. The gauge wheels may be vertically adjustable relative to the opener discs to vary the depth of the furrow which is cut into the soil by the double disc furrow opener.

A seed meter, which may also be carried by the row unit frame, receives seed or other product from a seed hopper. Seed or other product may be delivered to the hopper from the product storage system 140 by any conventional distribution system, such as the one described in U.S.

Patent No. 6,688,244, the disclosure of which is incorporated herein by reference. The transport of seed or other product to the furrow may be by any conventional system, such as one including a seed tube.

The row unit 128 may also include a pair of closing wheels which follow behind the gauge wheels and are positioned generally in line with double disc furrow opener. The closing wheels may push soil back into the furrow upon the seed or product being deposited therein.

In this disclosure, a system and method are described for lifting and folding the first and second wing sections 122, 124. There are several reasons for narrowing the width of the implement 100 by lifting and folding the first and second wing section 122, 124. For example, when the implement 100 is transporting from one field to another field, or transporting between a storage location and a field, narrowing the implement 100 may be desired. In addition, while the implement 100 is being transported between fields or between the storage location and field, it may encounter a wide range of ground profiles and lifting the first and second wing sections 122, 124 may also be desirable.

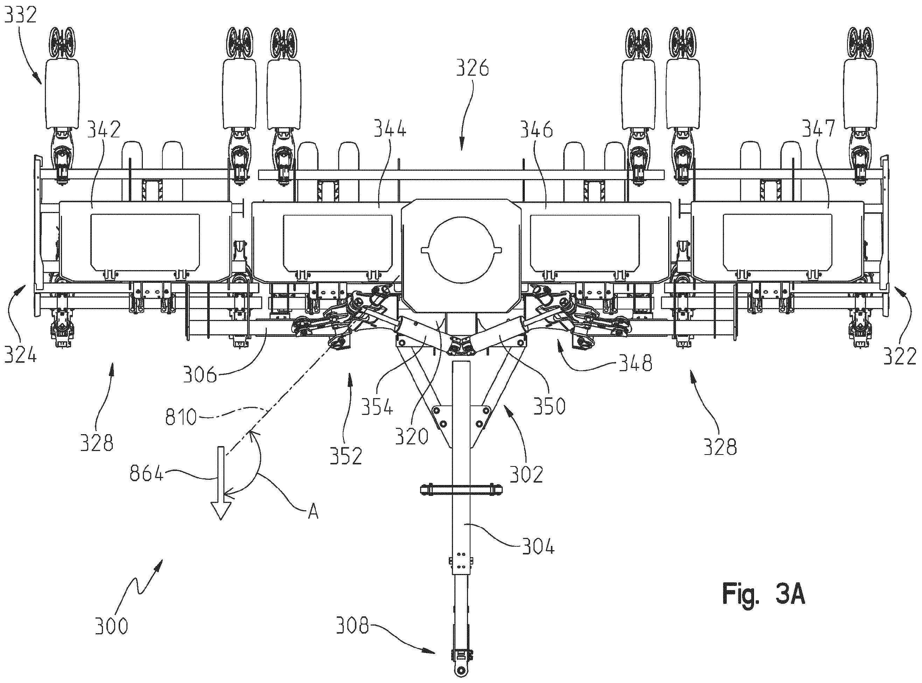

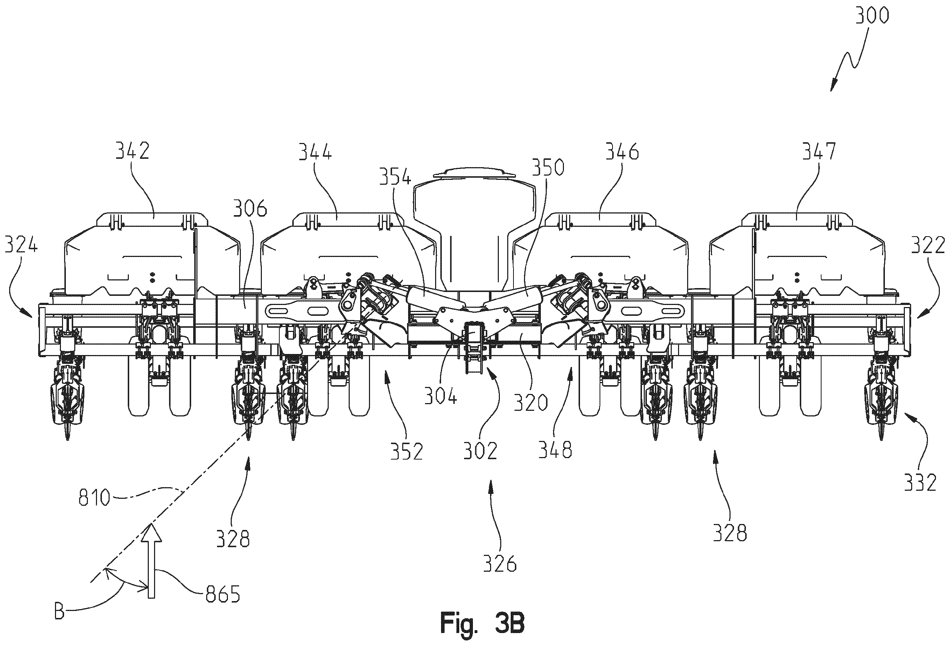

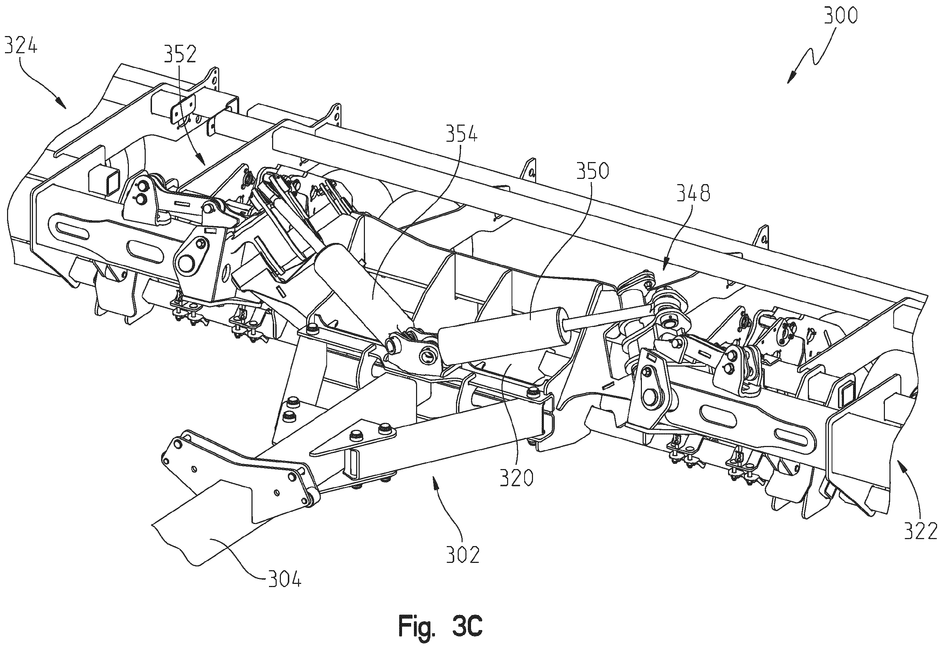

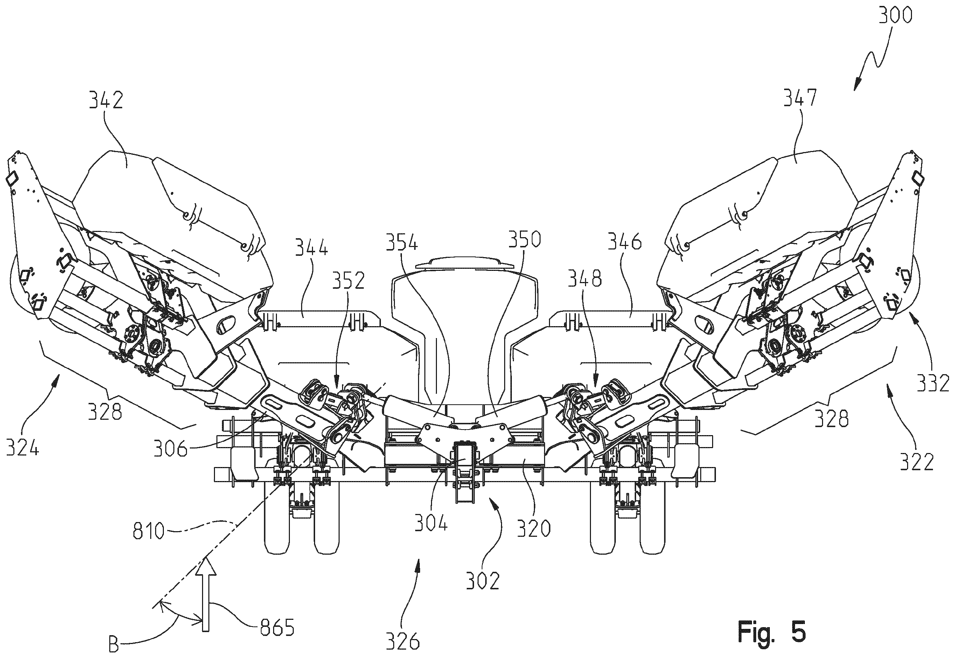

Referring now to Figs. 3-7, an implementation of an implement 300 that may lift and fold one or more of a first wing frame section 322 and a second wing frame section 324 is illustrated. Similar to the implement 100 of Fig. 1, the implement 300 of Figs. 3-7 may include a frame 302 with a draw bar 304 and a tool bar 306 spanning a width thereof. At the forward end of the draw bar 304 the implement 300 may include a tongue 308 for coupling the frame 302 to a towing vehicle. The tool bar 306 is shown with a main frame section 320, and the first and second wing frame section 322, 324 which extend laterally from the main frame section 320.

The main frame section 320 may carry a first plurality of row units 326, which may function as main section ground engaging tools, and a second plurality of row units 328 may be carried by the first and second wing frame sections 322, 324 and form wing ground engaging tools. A product storage system 340 may be mounted to the main frame section 320 and may include product bins or tanks, 342, 344, 346, and 347 as shown in Figs. 3-7. The implement 300 may also include main wheel assemblies and wing wheel assemblies 332, which may be identical to those described in Fig. 1.

The first and second wing frame sections 322, 324 may be moveably coupled to the main frame section 320 for rotation about fore and aft extending axes 136 and 138. The moveable connection allows the wing sections to follow the ground contour as the implement 100 moves through a field.

The implement 300 may also include an angled wing joint 348 which may be coupled to the main frame 320 and to a wing frame section 322 or 324. The angled wing joint 348 may also be referred to as a coupling mechanism. The angled wing joint 348 may be moveable relative to the main frame 320. In the illustrative implementations of Figs. 3-7, the implement 300 may have two angled wing joints 348, 352. The angled wing joint 348 may be coupled to a hydraulic actuator 350. In some examples, a first hydraulic actuator 350 may be coupled to the first angled wing joint 348 and a second hydraulic actuator 354 may be coupled to the second angled wing joint 352. In some examples, no more than one hydraulic actuator may be coupled to the first wing frame section 322 and no more than one hydraulic actuator may be coupled to the second wing frame section 324 to selectively transition the wing frame sections 322, 324 between an operational position and a stowed position. In one example, the first wing frame section 322 may be coupled to the first hydraulic actuator 350 and the second wing frame section 324 may be coupled to the second hydraulic actuator 354. In some examples, having one hydraulic actuator for each wing frame section 322, 324 may simplify the complexity in hydraulic routing, reduce oil consumption, and reduce hydraulic hardware, such as hoses, fittings, and other hardware relative to implements that have two or more actuator to move each wing frame section.

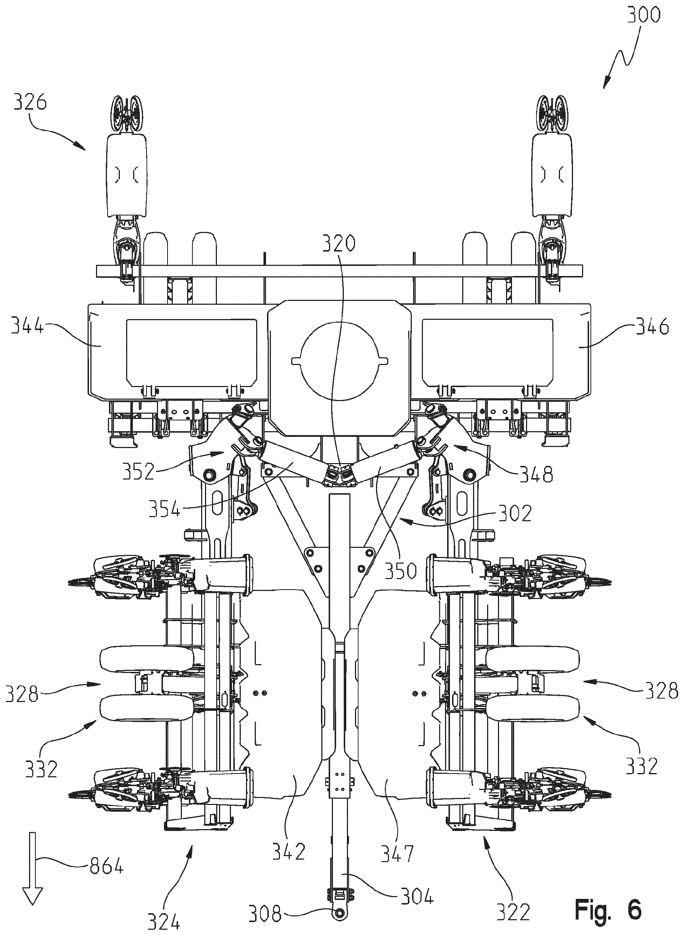

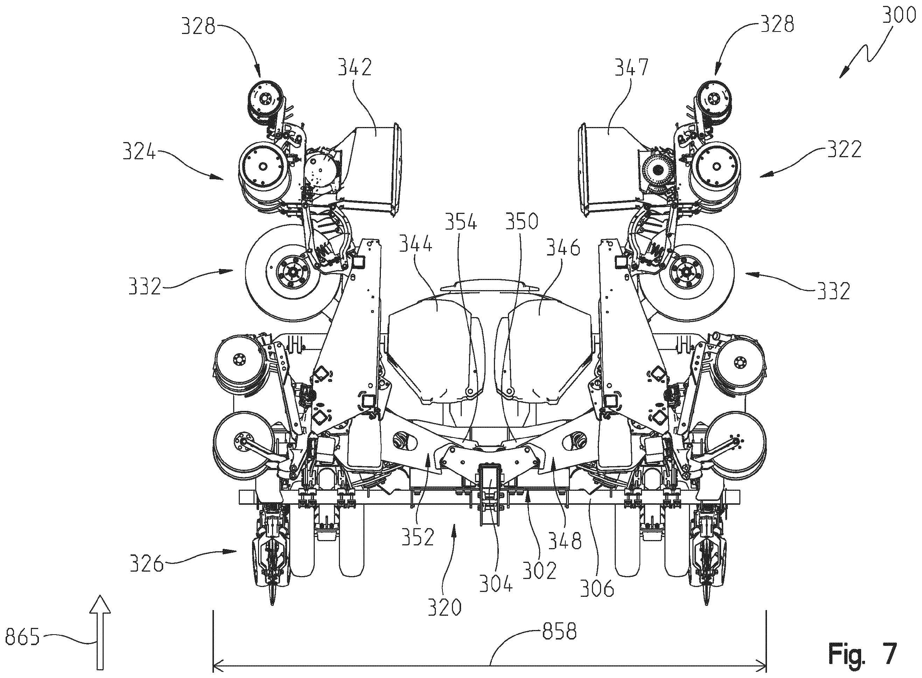

The implement 300 may move between a operational position as illustrated in Figs. 3A and 3B, and a stowed position as illustrated in Figs. 6 and 7. As illustrated in Figs. 3A and 3B, when the implement is in the operational position the first and second wing frame sections 322, 324 may be positioned such that one or more of the second plurality of row units 328 and the wing wheel assemblies 332 are in contact with the ground. In some examples, when the implement 300 is in the operational position one or more of the first wing frame section 322 and second wing frame section 324 may be parallel relative to the main frame 320. In one example, when the implement 300 is in the operational position the first and second wing frame sections 322, 324 may be parallel relative to the ground surface. In other examples, when the implement 300 is in the operational position one or more of the first and second wing frame sections 322, 324 may be slightly askew from parallel relative to the main frame 320 or the ground surface. In some examples, when the implement 300 is in the operational position one or more of the first wing frame 322 and the second wing frame 324 may be at an angle of 180° relative to the main frame 320. In other examples, when the implement 300 is in the operational position the first or second wing frame 322, 324 may be at an angle that is slightly larger than or slightly lower than 180°.

The main frame 320 may also include plates 360, 364, the first wing fame section 322 may include a stopper 362 and the second wing frame section 324 may include a stopper 366. In some examples, the stoppers 362, 366 may be rotatably coupled to the first and second wing frame sections 322, 324. In some examples, the stoppers 362, 366 may be a roller or wheel and may roll or rotate relative to the first or second wing frame sections 322, 324. In some examples, the stoppers 362, 366 may roll on the plates 360, 364 which may limit damage or friction between the main frame 320 and the first and second wing frame sections 322, 324 when the implement moves between the stowed and operational positions. Further, the stoppers 362, 366 may roll along the corresponding plates 360, 364 if the wing frame sections 322, 324 are permitted to pivot during use relative to the main frame 320. In other words, the stoppers 362, 366 may allow the wing frame section 322, 324 to pivot relative to the main frame 320 while maintaining planar alignment therewith along a vertical plane.

In other examples, the stoppers 362, 366 may be fixedly coupled to the first and second wing frame sections 322, 324 and may not roll relative to the first and second wing frame sections 322, 324. The stoppers 362, 366 may be configured to contact or impact the plates 360, 364. In some examples, the plates 360, 364 and stoppers 362, 366 may be contact points between the main frame 320 and the first and second wing frame sections 322, 324 and may prevent or limit the distance in which the first and second wing frame sections 322, 324 may move away from the stowed position.

As illustrated in Figs. 6-7, the implement 300 may also be positioned in a stowed position. When the implement 300 is in the stowed position, the second plurality of row units 328 and the wing wheel assemblies 332 may not be in contact with the ground. In some examples, the implement 300 is in the stowed position when the implement 300 is not in the operational position. In other examples, the implement 300 may be in an operational position or a stowed position, and when the implement 300 moves between the operational and stowed position may be in a transitory position. In some examples, the wing wheel assemblies 332 may be further from the ground, or have a higher ground clearance relative to front folding implements when the implement 300 is in the stowed position. In one example, when the implement 300 is in the stowed position, one or more of the first wing frame section 322 and the second wing frame section 324 may be at an angle of 90° or less relative to the main frame 320. In other examples, when the implement 300 is in the stowed position one or more of the first wing frame section 322 and the second wing frame section 324 may be at an angle of 90° or more relative to the main frame 320. In some implementations, when the implement 300 is in the stowed position, one or more of the first wing frame section 322 and the second wing frame section 324 may be perpendicular to the ground surface. In some examples, the wing frame sections 322, 324 may be slightly askew from perpendicular to the ground surface. The implement 300 may also have a locking mechanism 354 and one or more of the first wing frame section 322 and the second wing frame section 324 may be coupled to the locking mechanism when the implement 300 is in the stowed position.

In some examples, when the implement 300 is in the stowed position one or more of the first wing frame section 322 and the second wing frame section 324 may lock via the locking mechanism 354. The locking mechanism 354 may include one or more holes and the wing frames 322, 324 may include one or more pins that fit within the one or more holes. In one example, the locking mechanism may include two holes and each wing section 322, 324 may include two pins. In another example, the locking mechanism may have three or more holes and each wing assembly 322, 324 may include three or more pins. In some examples, the pins may be spring loaded, such that a spring may be compressed when the pins are situated against the locking mechanism but not through the holes, and once the pins are located through the holes the springs may extend to a less-compressed or de-compressed state relative to the compressed state of the spring when the pin is against the locking mechanism. The locking mechanism 354 may prevent the first wing frame section 322 and the second wing frame section 324 from transitioning out of the stowed position when the wing frame sections 322, 324 are locked in the locking mechanism 354.

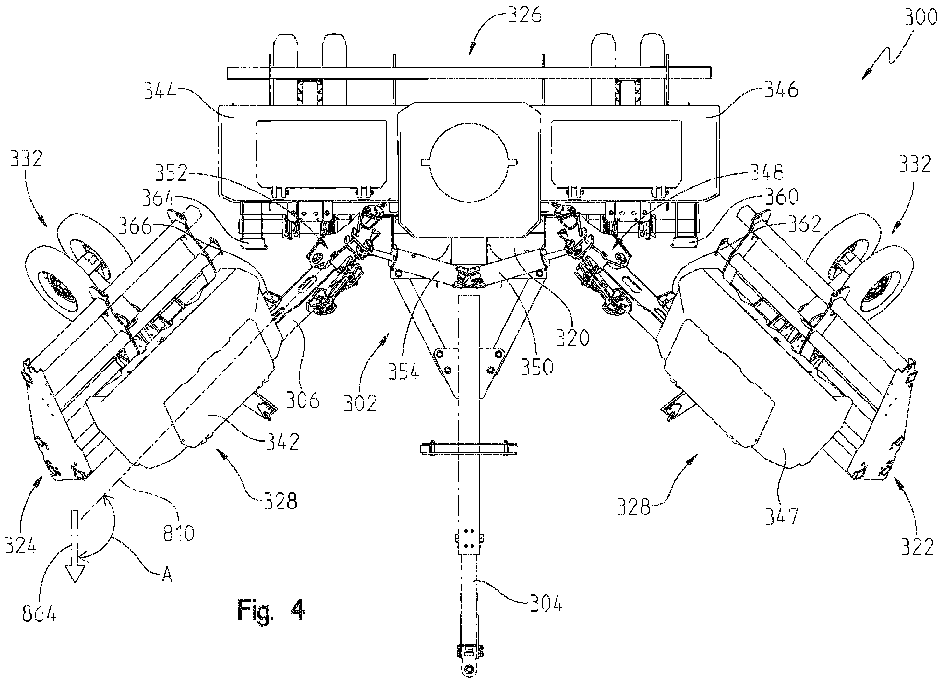

When the implement 300 moves between the operational position and the stowed position, the implement 300 may be in the transitory position. This transitory position may occur when the implement 300 moves between the operation position and the stowed position. When the implement 300 is in the transitory position, the implement may be between the operational position and the stowed position. As illustrated in Figs. 4-5, when the implement 300 is in the transitory position one or more of the wing frame sections 322, 324 may be at least partially lifted and at least partially rotated relative to the main frame 320. When one or more of the wing frame sections 322, 324 are in the transitory position, the angle between the one or more wing frame sections 322, 324 and the main frame 320 may be greater than 90°. In some examples, when the implement is in the transitory position the angle between the one or more wing frame sections 322, 324 and the main frame 320 may be less than 180°. In one example, when the implement is in the transitory position the angle between the one or more wing frame sections 322, 324 and the main frame 320 may be between 180° and 90°.

In some examples, the implement 300 may move from the operational position to the stowed position. In these examples, at least one wing frame section 322, 324 may move in an upward and inward direction. The upward direction may refer to moving away from the ground, and the inward direction may refer to moving towards the draw bar 304. In some examples, when the implement 300 moves from the operational position to the stowed position, at least one wing frame section 322, 324 may simultaneously move in the upward and inward direction. In some examples, the upward and inward direction may move along a first angular direction. In some examples, the first angular direction may be defined as a direction between a horizontal direction and a vertical direction relative to the ground.

According to some implementations, the implement 300 may move from the stowed position to the operational position. In these examples, one or more wing frame sections 322, 324 may move in a downward and outward direction. In some examples, the downward and outward direction may be the opposite direction as the upward and inward direction. According to some examples, the downward direction may refer to moving towards the ground, and the outward direction may refer to moving away from the draw bar 304. In some examples, when the implement 300 moves from the stowed position to the operational position it moves in a second angular direction. According to one example, the second angular direction may be opposite of the first angular direction.

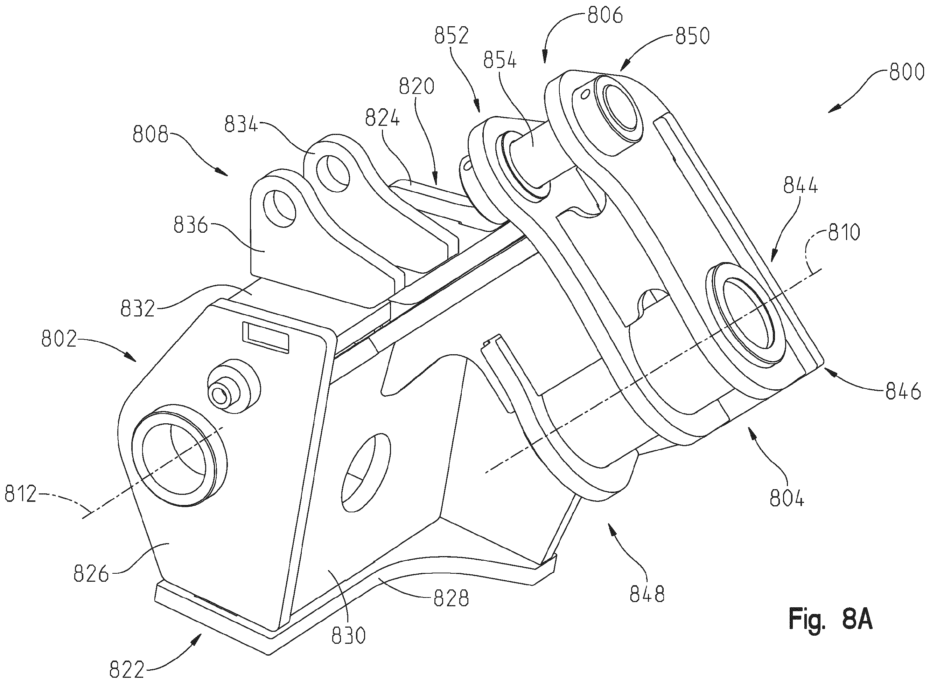

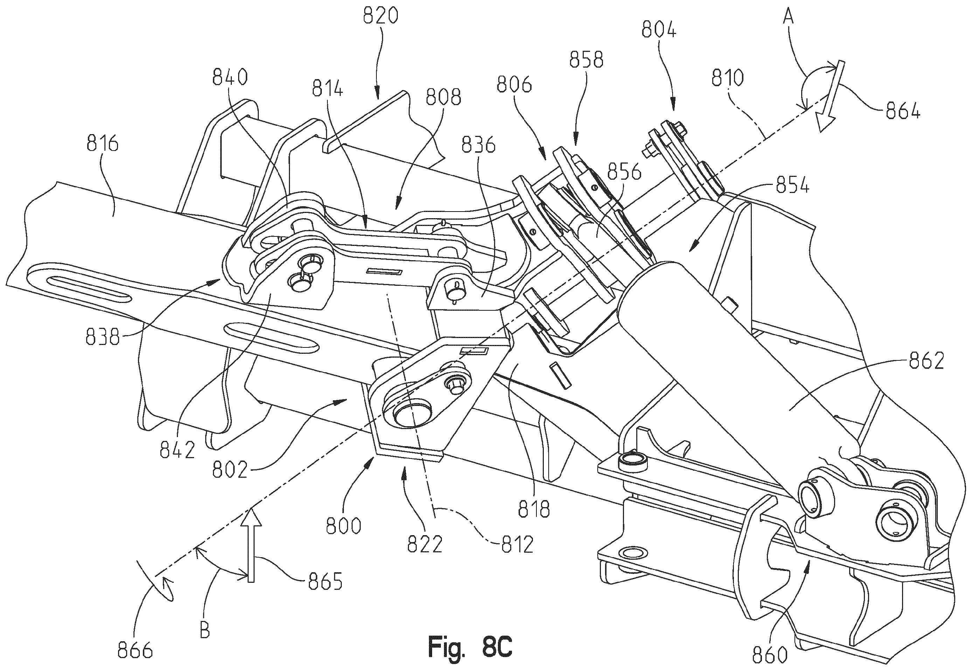

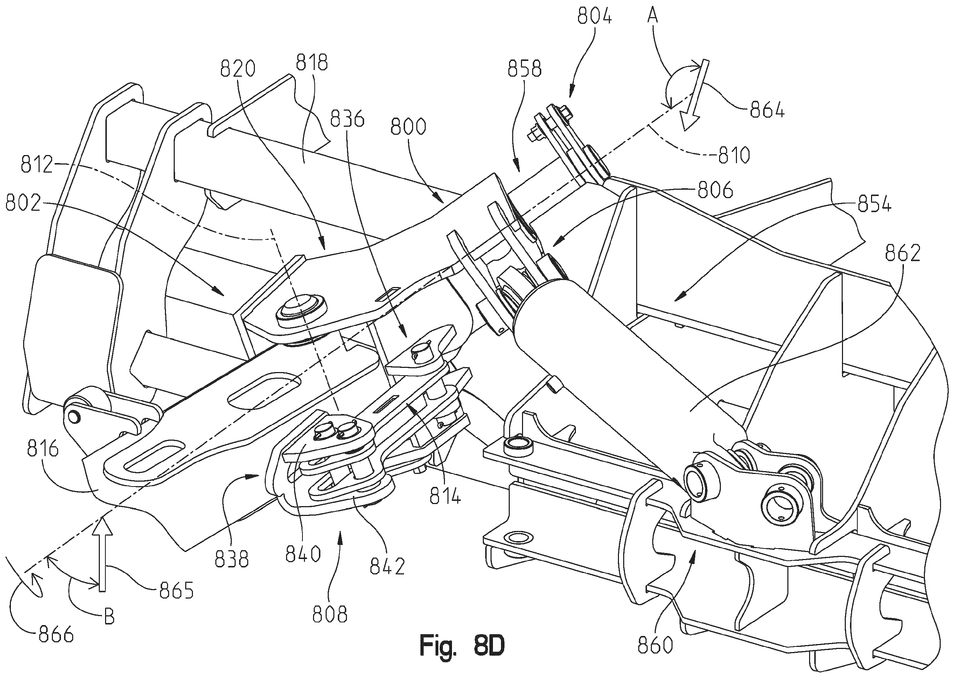

Referring to Figs. 8A-8B, one implementation of an angled wing joint 800 is illustrated. The angled wing joint 800 may include a first wing frame coupling section 802, a main frame coupling section 804, an actuator coupling section 806, and a second wing frame coupling section 808. The angled wing joint 800 may be coupled to the first wing frame section 816 at the first wing frame coupling section 802. The angled wing joint 800 may have a front side 820 and a back side 822, wherein the first wing frame coupling section 802 has a back wall 824 located at the back side 820 of the angled wing joint 800 and a front wall 826 located at the front side 822 of the angled wing joint 800. The first wing frame coupling section 802 may also include a top wall 832 and a bottom wall 828 located between the back wall 824 and the front wall 826, wherein the top wall 832 is located above the bottom wall 828. The first wing frame coupling section 802 may also include a side wall 830, wherein the side wall 830 is located between the back wall 824, the front wall 826, the bottom wall 828 and the top wall 832. In some examples, the side wall 830 may have a width, and the width of the side wall 830 may be the length of the sidewall between the back wall 824 and the front wall 826. The side wall 830 may also have a height, and the height of the side wall 830 may be the length of the side wall 830 from the bottom wall 828 to the top wall 832. In some implementations, the width of the sidewall may be approximately equal to a width of the first or second wing frame section. In other implementations, the width of the sidewall 830 may be larger than the width of the first wing frame section 816. In one example, the height of the side wall 830 may be approximately equal to the height of the first wing frame section 816, and in other examples the height of the side wall 830 may be larger than the height of the first wing frame section 816. The first wing frame coupling section 802 may have an opening, and the opening may be located between the back wall 824, front wall 826, bottom wall 828, top wall 832, and side wall 830. The opening may have a width and height that is the same as the side wall. In other examples, the opening may have a width and height that are greater than or smaller than the width and height of the side wall 830. The first wing frame coupling section 802 may be configured such that the first wing frame section 816 may be located within the opening. While a specific configuration of the wing joint 800 is illustrated herein being substantially formed from a combination of planar components such as walls, this disclosure contemplates forming the joint 800 using other manufacturing techniques as well. In one example, the wing joint 800 may be formed from a casting process. In this configuration, the pivot and coupling locations may be similar to those described herein but the remaining portions of the wing joint may be formed from a mold through a casting manufacturing process. Accordingly, while a specific assembly of the joint 800 is illustrated and discussed herein being formed of substantially planar components coupled to one another, this disclosure contemplates forming the joint 800 using any known manufacturing technique capable of providing a component with pivot axes and coupling locations similar to those described herein.

The first wing frame coupling section 802 may have a hole in the back wall 824 and a hole in the front wall 826. **In** some implementations, these holes may be co-axial. The wing frame axis 812 may be defined between the back wall 824 hole and front wall 826 hole. **In** some implementations, the first wing frame section 816 may have two corresponding holes, and one corresponding hole may align with the front wall 826 hole and another corresponding hole may align with the back wall 824 hole. **In** one example, a pin may be at least partially located between one corresponding hole on the first wing frame section 816 and the front wall 826 hole, and another pin may be at least partially located between another corresponding hole on the first wing frame section 816 and the back wall 824 hole. **In** another example, one pin may be at least partially located in the front wall 826 hole, one corresponding hole on the first wing frame section 816, another corresponding hole on the first wing frame section 816, and the back wall 824 hole. The one or more pins may be coupled to the first wing frame coupling section 802 and the first wing frame section 816 such that the first wing frame section 816 may rotate about the wing frame axis 812. While a hole-and-pin method of coupling the first wing frame section 816 and the angled wing joint 800 is described herein, any method of rotatably coupling the first wing frame section 816 to the angled wing joint 800 is considered herein, such as, for example, other types of pivot joints, hinge joints, saddle joints, and ball and socket joints.

The angled wing joint 800 may be pivotably coupled to the first wing frame section 816. The first wing frame section 816 may move or pivot about a wing frame axis 812. In some examples, the first wing frame section 816 may pivot about the wing frame axis 812 to allow the first wing frame section 816 to follow the ground contour as the implement 300 moves through a field. The wing frame arm 814 may limit the amount of rotation that the first wing frame section 816 may rotate about the wing frame axis 812. In one example, the first wing frame section 816 may rotate 10° about the wing frame axis 812. In another example, the first wing frame section 816 may rotate 10° in a first direction about the wing frame axis 812 and 10° in a second direction about the wing frame axis 812. In another example, the first wing frame section 816 may rotate more than 10° about the wing frame axis 812, such as 15°, 20° or 25°. In other examples, the first wing frame section 816 may rotate less than 10° about the wing frame axis 812, such as 7°, 5°, or 3°.

In some examples, the angled wing joint 800 may be coupled to the first wing frame section 816 at a second location. For example, the first wing frame section 816 may be coupled to the second wing frame coupling section 808. In some examples, the second wing frame coupling section 808 may include a first coupling member 834 and a second coupling member 836. In one example, the first and second coupling members may be flanges or brackets. In other examples, the second wing frame coupling section 808 may include one coupling member. The first coupling member 834 may have a hole and the second coupling member 836 may have a hole, wherein the first coupling member hole and the second coupling member hole may be co-axial.

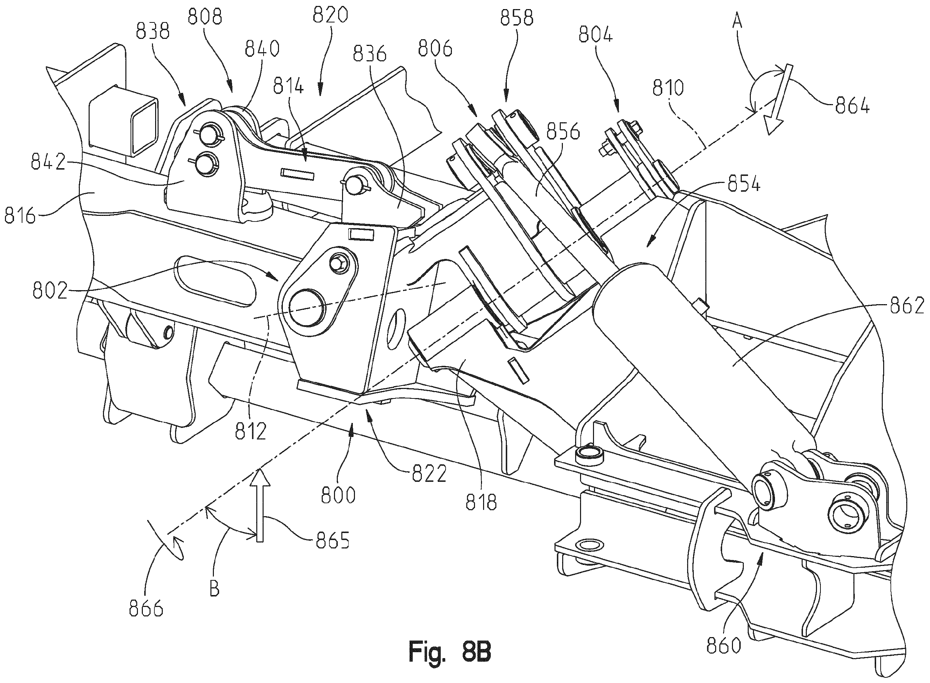

As illustrated in Fig. 8B-8D, the wing frame arm 814 may be coupled to the second wing frame coupling section 808 and to the first wing frame section 816. The wing frame arm 814 may have one or more holes or slots. In one example, the one or more holes or slots of the wing frame arm 814 may be co-axial with, or otherwise aligned with the holes located on the first and second coupling members 834, 836. In one implementation, one pin may be located at least partially within the hole of the second coupling member 836 and at least partially within the one or more holes or slots of the wing frame arm 814, and another pin may be located at least partially within the hole of the first coupling member 834 and at least partially within the one or more holes or slots of the wing frame arm 814. In another implementation, one pin may be located in the hole of the second coupling member 836, in the one or more holes or slots of the wing frame arm 814, and in the hole of the first coupling member 834.

The wing frame arm 814 may also be coupled to the first wing frame section 816. The first wing frame section 816 may include a wing frame coupling member 838. In some examples the first wing frame section 816 may include more than one wing frame coupling member 838. In one example, the wing frame coupling member 838 may be a bracket. In some examples, the wing frame coupling member 838 may have a first flange 840 and a second flange 842, wherein the first and second flanges 840, 842 are coupleable to the wing frame arm 814. In one implementation, the wing frame coupling member 838 may be a bracket, however other methods of coupling a flange to the wing frame arm 814 are considered herein, such as, for example, other types of mounts, mechanical fasteners, screws, or pins.

In one example, the wing frame coupling member 838 may have a first flange 840 and a second flange 842, wherein the first flange 840 has two or more holes and the second flange 840 has two or more holes. In this example, the wing frame arm 814 may have a plurality of holes or slots, wherein at least one of the holes or slots on the wing frame arm 814 may be co-axial or may otherwise be aligned with the one or more of the two or more holes on the first flange 840 and with one or more of the two or more holes on the second flange 842. In some examples, two or more pins may couple the first flange 840 to the wing frame arm 814 and two or more pins may couple the second flange 842 to the wing frame arm 814.

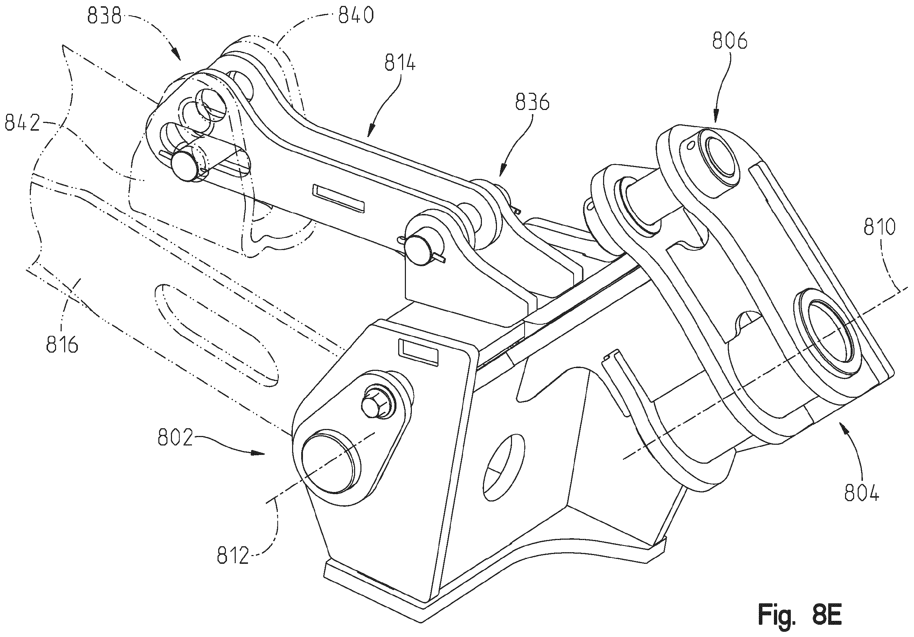

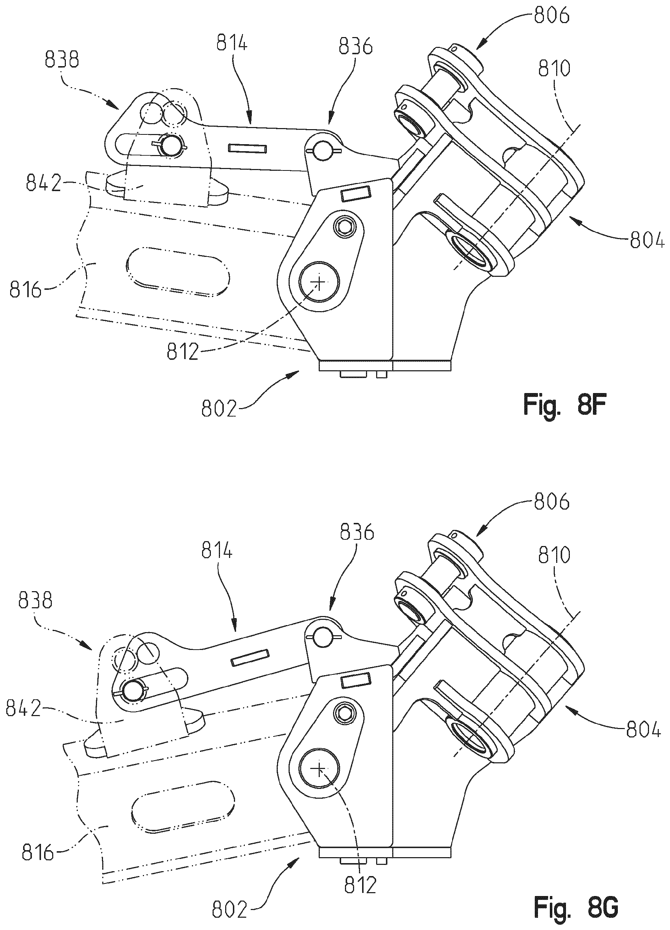

In some implementations, as illustrated in Figs. 8E-8G the wing frame arm 814 may have one or more holes and one or more slots. In these examples, the pins may be moveable within the slots when the holes are not secured, or no pin is positioned within the holes, and the pins may not be moveable within the slots when the holes are secured, or a pin is positioned within the holes. For example, as illustrated in Figs. 8E-G, the slot may have a first end and a second end, the first end of the slot being closer to the coupling mechanism 800 relative to the second end of the slot when the implement 300 is in the operational position. Fig. 8E illustrates an example of the pin positioned in a first position, which may be located between the first and second ends of the slot. Fig. 8F illustrates an example of the pin positioned in a second position, and the second location may be located towards the first end of the slot. Fig. 8G illustrates an example of the pin in a third position, and the third position may be located towards the second end of the slot. In some examples, the movement of the pin between the first and second end of the slot may enable the first wing frame section 816 to pivot about the wing frame axis 812 relative to the main frame 320 to follow the contours of the ground as the implement 300 moves throughout a field. In some examples, the wing frame coupling member 838 may be rotatable or otherwise moveable relative to the first wing frame section 816.

In some examples, the one or more pins may be removably coupled to the wing frame coupling member 838 and the wing frame arm 814. In one example, the wing frame arm 814 may be coupled to the wing frame coupling member 838 via one or more pins and the first wing frame section 816 may not rotate about the wing frame axis 812. In one implementation, one or more pins may be removed when the implement 300 is in the operational position or otherwise not in the stowed position and not moving to the stowed position. When one or more pins are removed, the first wing frame section 816 may at least partially rotate about the wing frame axis 812. In some examples there may be two pins that couple the wing frame arm 814 to the wing frame coupling member, and one pin may be removed and the other pin may not be removed. In these examples, as illustrated in Figs. 8E-8G, the pin that is not removed may be located through the slot of the wing frame arm 814, and the pin may move within the slot. When the pin moves within the slot the first wing frame section 816 may at least partially rotate about the wing frame axis 812.

In another example, the one or more pins may be coupled to the wing frame arm 814 and the wing frame coupling member 838. In this example, the first wing frame section 816 may not move relative to the wing frame axis 812. In some examples, the one or more pins may be inserted before the implement 300 moves to a stowed position to prevent the first wing frame section 816 from moving about the wing frame axis. In some examples, one or more pins may be removed before the implement operates, which may allow the first wing frame section 816 to at least partially move about the wing frame axis 812. In some examples, one or more pins may be removed manually, for example by an operator. In one example, the wing frame arm 814 may be fixedly coupled to the wing frame coupling member 838, and the wing frame coupling member 838 may not rotate about the wing frame axis 812.

The angled wing joint 800 may also be coupled to the main frame 818 at the main frame coupling section 804. In some implementations, the main frame coupling section 804 may have a hole 844, with a first end 846 and a second end 848. The main fame axis 810 may be defined through the hole 844. For example, the main frame axis 810 may extend from beyond the first end 846 of the hole 844, through the hole 844, and beyond the second end 848 of the hole 844. According to some examples, a fastener may couple the main frame 818 to the angled wing joint 800 by extending through a portion of the main frame and through the hole 844. In one example, the fastener may extend through a portion of the main frame 818, and through the first and second ends 846, 848 of the hole 844. In some examples, the angled wing joint 800 may be moveably coupled to the main frame 818, and the angled wing joint 800 may be configured to move relative to the main frame 818. In some examples, the angled wing joint 800 may pivot relative to the main frame 818. In some examples, the fastener may be a bolt, axle, rod, or another fastening mechanism configured to moveably couple the main frame 818 to the angled wing joint 800.

In some examples, the main frame axis 810 may be positioned between a horizontal position and a vertical position. In other words, the main frame axis 810 may be offset from a horizontal and vertical plane. In some examples, there may be an angle A defined between the main frame axis 810 and the forward direction 864 or a ground plane. The angle A between the main frame axis 810 and the forward direction 864 may be between 90° and 180°. In one example, the angle A may be 135°. In other examples, the angle A may be less than 135°, such as 120°, 100°, or 95°. In another example, the angle A may be greater than 135°, such as 145°, 150°, 165°, or 175°. In some examples, there may be an angle B defined between the main frame axis 810 and a vertical plane 865. In some examples, the vertical plane may extend at a 90° angle from the forward direction 864. In some examples, angle B may be between 90° and 180°.

The angled wing joint 800 may also include an actuator coupling section 806 wherein the angled wing joint 800 may be coupled to an actuator 854 at the actuator coupling section 806. **In** one example, the actuator coupling section 806 may include a first side 850 and a second side 852. The first side 850 may have a first hole and the second side 852 may have a second hole, and a shaft 854 may extend from the first hole to the second hole. **In** some examples the shaft 854 may be pivotally coupled to the actuator coupling section 806. **In** other examples, the shaft 854 may be moveably coupled to the actuator coupling section 806 such that the shaft 854 may move or rotate relative to the first or second side 850, 852 of the actuator coupling section 806.

The actuator 854 may include a first actuator end 858 with an actuator shaft 856 positioned towards the first actuator end 858, and a second actuator end 860 with an actuator body 862 positioned towards the second actuator end 860, wherein the actuator shaft 856 may be coupled to the actuator body 862 at a location between the first actuator end 858 and the second actuator end 860. The actuator may be coupled to the angled wing joint 800 by coupling the first actuator end 858 to the actuator coupling section 806. In some examples, the first actuator end 858 may be moveably coupled to the actuator coupling section 806. In one example, the first actuator end 858 may be coupled to the actuator coupling section 806 via a ball joint or a Heim joint. In another example, the actuator 854 may include a hole in the actuator shaft 856. In this example the hole in the actuator shaft 856 may be aligned with the holes on the first side 850 and second side 852 of the actuator coupling section 806, and the shaft 854 may extend from the first side 850 of the actuator coupling section 806, through the hole in the actuator shaft 856, and at least partially into the hole in the second side 852 of the actuator coupling section 806. The actuator 854 may be a hydraulic actuator; however, other types of actuators may be used. Further, this disclosure contemplates other orientations of the actuator wherein the actuator body 862 may be positioned on the opposite side relative to the illustrated embodiment. Accordingly, this disclosure contemplates using any known coupling technique and actuator orientation to selectively pivot the wing joint 800 as discussed herein.

The actuator 854 may be coupled to the main frame 818 at the second actuator end 860. **In** some examples, the actuator 854 may be moveably coupled to the main frame 818. **In** one example, the actuator 854 may be pivotably coupled to the main frame, such that the actuator 854 may pivot relative to the main frame. **In** one example, the actuator 854 may be coupled to the main frame 818 with a ball joint. **In** another example, the second actuator end 860 may have a hole and the hole may be aligned with a plurality holes of the main frame 818. **In** this example, the plurality of holes of the main frame 818 may include a first hole and a second hole, the hole in the actuator 854 may be aligned with the first and second main frame 818 holes, and a pin or shaft may extend from the first hole, through the actuator hole, and to the second main frame 818 hole.

The actuator 854 may move between a retracted position and an extended position. **In** the extended position, the actuator shaft 856 may extend from the actuator body 862. **In** the retracted position, the actuator shaft may retract into the actuator body 862. The actuator shaft 856 may be coupled to the actuator body 862 at a location between the first actuator end 858 and the second actuator end 860.

The implement 300 may further include a controller and an input device wherein the controller may be communicatively coupled to the input device. The input device may be a device wherein one or more commands may be communicated. In some examples, the input device may be a button and the button may be located on the implement 300 or remote relative to the implement 300. In some examples, the input device may be a keyboard, an algorithm, a display or a touchscreen, or any other type of input device. In some examples, the controller may be wirelessly coupled to the input device, although the controller may also be coupled to the input device via a wire.

The controller may selectively alter the configuration of one or more of the first actuator 350 or the second actuator 354 through one or more electro-hydraulic system. When the first actuator 350 is in the extended position, the first wing frame section 322 may be in the operational position, and when the first actuator 350 is in the retracted position, the first wing frame section 322 may be in the stowed position. When the second actuator 354 is in the extended position, the second wing frame section 324 may be in the operational position, and when the second actuator 354 is in the retracted position, the second wing frame section 324 may be in the stowed position. When the implement 300 is in the stowed position the width of the implement 300 may be narrower relative to the width of the implement in the operational position. In one example, the implement 300 in the stowed position may have a width 358. In one example, the width 358 may be approximately 4.5 meters, although the width 358 of the implement 300 may be larger than 4.5 meters or smaller than 4.5 meters. In some examples there may by width limitations on the transportation of vehicles on roads, and in these examples the width 358 of the implement 300 in the stowed position may be within those limitations.

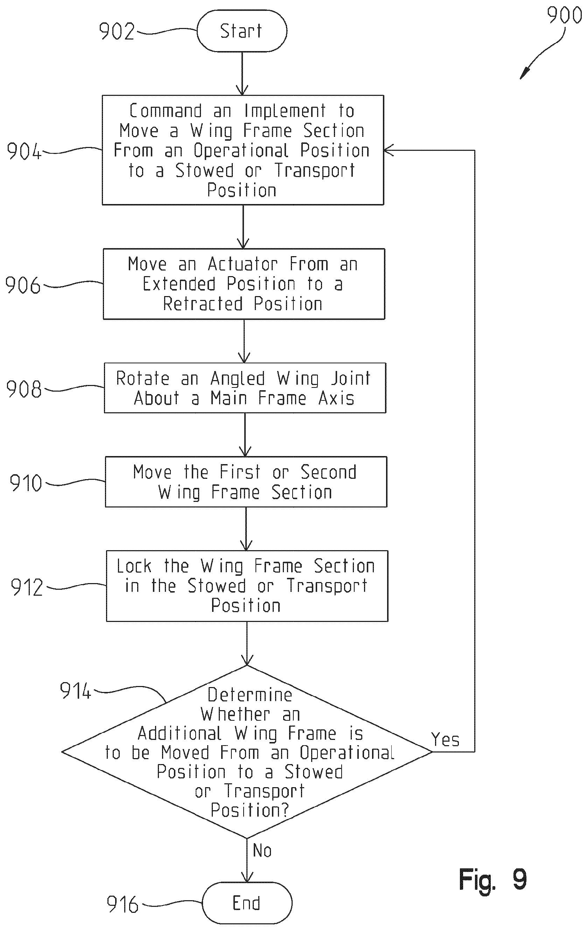

Fig. 9 is one implementation of a method 900 for moving an implement 300 from an operational position to a stowed position, and more specifically for moving the first wing frame section 816 from an operational position to a stowed position. Beginning at block 902, the implement 300 may be in an operational position. **In** other words, the first wing frame section 816 may be in the operational position. Before the first wing frame section 816 can transition to the stowed position, the one or more pins of the wing frame arm 814 may be inserted therein to prevent the first wing frame section 816 from moving about the wing frame axis. This may be done by a user or through an automated process. Once the wing frame section 816 is substantially locked relative to the wing joint 800 via the one or more pins, in block 904 a command may be sent to the implement 300 to move a wing frame section from the operational position to a stowed position. **In** one example the operator may send the command by pressing a button, such as a button on a keyboard or on a touchscreen. **In** another example, the command may be sent automatically or by an algorithm.

When the implement 300 is in the operational position, the actuator 854 may be in an extended position and the actuator shaft 856 may extend from the actuator body 862. When the actuator 854 is in the extended position, the actuator 854 may be one force that maintains the implement 300 in the operational position. After the operator commands the implement 300 to move a wing frame section to the stowed position, in block 904, the implement 300 may move an actuator 854 from an extended position to a retracted position, as in block 906.

The actuator 854 may be coupled to the angled wing joint 800, and more particularly to the actuator coupling section 806 of the angled wing joint 800. Additionally, the angled wing joint may be coupled to the main frame 818 such that the angled wing joint 800 may pivot about the main frame axis 810. The main frame axis 810 may be positioned between a horizontal position and a vertical position relative to a ground surface. Moving the actuator 854 from the extended position to the retracted position may rotate the angled wing joint 800 about the main frame axis 810, as in block 908. **In** one example, when the actuator 854 moves from the extended position to the retracted position, the angled wing joint 800 may rotate about the main frame axis 810 in a counter-clockwise direction 866 relative to the main frame axis 810. **In** some examples, the counter-clockwise direction 866 may be referred to as a first direction. **In** this example, moving the actuator 854 from the retracted position to the extended position may rotate the angled wing joint 800 in a clockwise direction relative to the main frame axis 810, also referred to herein as a second direction. **In** a second example, when the actuator 854 moves from the extended position to the retracted position, the angled wing joint 800 may rotate about the main frame axis 810 in the clockwise direction relative to the main frame axis 810, also referred to as a third direction. **In** this second example, moving the actuator 854 from the retracted position to the extended position may rotate the angled wing joint 800 in the counter-clockwise direction 866 relative to the main frame axis 810, also referred to as a fourth direction.

Certain embodiments, examples, and implementations in this disclosure refer specifically to the first wing frame section 816 being coupled to the angled wing joint 800. However, it should be appreciated that a substantially mirrored configuration is considered herein for the second wing section as well. Accordingly, the teachings discussed herein for the first frame section 816 and corresponding angled wing joint 800 and the relationships thereof with regard to the main frame are equally applicable to the opposite wing section in a substantially mirrored arrangement that a person skilled in the art understands in view of the teachings of this disclosure.

The first wing frame section 816 may each be coupled to a separate angled wing joint 800 configured to correspond with the respective side of the wing frame section. When the angled wing joint 800 moves, the first wing frame section 816 may move, as in block 910. **In** one example, the first wing frame section 816 may be coupled to the angled wing joint 800 at the first wing frame coupling section 802. When the angled wing joint rotates about the main frame axis 810, the first wing frame section 816 may also rotate about the main frame axis 810. In a first example, when the angled wing joint 800 rotates about the main frame axis 810 in the counter-clockwise direction 866 relative to the main frame axis 810, the first wing frame section 816 may also rotate about the main frame axis 810 in the counter-clockwise direction 866 relative to the main frame axis 810. In this example, when the angled wing joint rotates in a clockwise direction relative to the main frame axis 810, the first wing frame section 816 may also rotate in the counter-clockwise direction 866 relative to the main frame axis 810.

In one example, when the first wing frame section 816 moves in the counter-clockwise direction 866 the first wing frame section 816 may move from the operational position to the stowed position. In this example, when the first wing frame section 816 moves in the clockwise direction the first wing frame section 816 may move from the stowed position to the operational position. In a second example, when the first wing frame section 816 moves in the counter-clockwise direction 866 the first wing frame section 816 may move from the stowed position to the operational position. In this second example, when the first wing frame section 816 moves in the clockwise direction the first wing frame section 816 may move from the operational position to the stowed position.

In some examples, the first wing frame section 816 and/or the main frame 818 may include a locking mechanism. When the implement 300 moves the first wing frame section 816 to the stowed position, the first wing frame section 816 may lock in the stowed position, as in block 912.

After the first wing frame section 816 is locked in the stowed position, as in block 912, it may then be determined whether an additional wing frame section is to be moved from an operational position to a stowed position. If an additional wing frame section is to be moved from an operational position to a stowed position, the implement 300 may then be commanded to move the wing frame section from the operational position to the stowed position, as in block 904, and the method 900 may proceed. If an additional wing frame section is not to be moved from an operational position to a stowed position, the method may end, as in block 916.

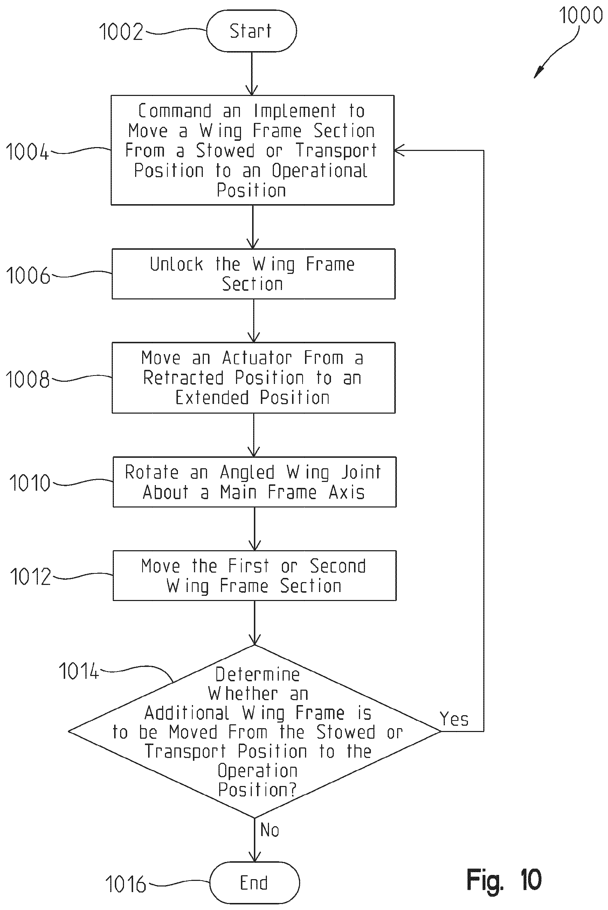

Fig. 10 is one implementation of a method 1000 for moving an implement 300 from a stowed position to an operational position, and more specifically for moving the first wing frame section 816 from the stowed position to the operational position. Beginning at block 1002, the implement 300 may be in the stowed position. In block 1004, a command is sent to the implement 300 to move a wing frame section from the stowed position to the operational position. In some examples, the operator may send the command by pressing a button. In other examples, the command may be sent automatically or via an algorithm.

The first wing frame section 816 and/or the main frame 818 may include a locking mechanism. In some examples, the first wing frame section 816 may need to be unlocked from the locking mechanism, as in block 1006. In some examples, this may be performed manually, wherein an operator may physically unlock the locking mechanism. In other examples, this may be done remotely, wherein the operator may input an unlock command and the implement may unlock the locking mechanism. In one implementation, the implement 300 may be in the stowed position and the first wing frame section 816 may be locked, and a command may be provided to the implement 300 to move a wing frame section to an operational position, as in block 1004. In this implementation, the implement 300 may unlock the wing frame section, as in block 1006, without any additional unlocking command.

When the implement 300 is in the stowed position, the actuator 854 may be in the retracted position. After the wing frame section is unlocked, as in block 1006, the implement 300 may move the actuator 854 from the retracted position to the extended position, as in block 1008. The actuator 854 may be coupled to the angled wing joint 800 at the actuator coupling section 806. The angled wing joint 800 may also be coupled to the main frame 818 such that the angled wing joint 800 may pivot about the main frame axis 810. The main frame axis 810 may be positioned between the horizontal and vertical position relative to the ground surface. As shown in block 1010, moving the actuator 854 from the retracted position to the extended position may rotate the angled wing joint 800 about the main frame axis.

Similar to the wing joint 800 in method 900 of Fig. 9, the wing joint 800 in method 1000 of Fig. 10 may move in the clockwise or counter-clockwise direction 866 relative to the main frame axis 810. In one example, when the actuator 854 moves from the retracted position to the extended position, the angled wing joint 800 may rotate in the clockwise direction relative to the main frame axis 810, and when the actuator 854 moves from the extended to the retracted position, the angled wing joint 800 may rotate in the counter-clockwise direction 866 relative to the main frame axis 810. In a second example, when the actuator 854 moves from the retracted position to the extended position, the angled wing joint 800 may rotate in the counter-clockwise direction 866 relative to the main frame axis 810. In this second example, when the actuator 854 moves from the extended position to the retracted position, the angled wing join 800 may rotate in the clockwise direction relative to the main frame axis 810.

The first wing frame section 816 may move, as in block 1012. In one example, the first wing frame section 816 may move from the stowed position to the operational position when the angled wing joint 800 moves from the stowed position to the operational position because the first wing frame section 816 may be coupled to the angled wing joint 800. When the angled wing joint 800 moves about the main frame axis 810, the first wing frame section 816 may correspondingly rotate about the main frame axis 810.

Once the first wing frame section 816 moves to the operational position, whether an additional wing frame section is to be moved from the stowed position to the operational position may be determined, as in block 1014. If an additional wing frame section is to be moved from the stowed position to the operational position, then a command may be provided to the implement 300 to move a wing frame section from the stowed position to the operational position, as provided in block 1004, and the method 1000 may proceed. If no additional wing frame sections are to be moved from the stowed position to the operational position, then the method 1000 may end, as provided in block 1016.

As illustrated in at least Figs. 3-7, there may be a first actuator 350 and a second actuator 354. In some examples, the first actuator 350 and second actuator 354 may operate simultaneously, such that the first wing frame section 322 and the second wing frame section 324 may move between the stowed position and the operational position at the same time. In other examples, only one of the first actuator 350 or the second actuator 354 may operate at one time. **In** these other examples, only one of the first or second wing frame sections 322, 324 may move between the stowed position and the operational position at one time.

While implementations incorporating the principles of the present disclosure have been described hereinabove, the present disclosure is not limited to the described implementations. Instead, this application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. An agricultural implement (100, 300) comprising:
a main frame (320, 818);
a wing frame section (322, 324, 816) pivotally coupled to the main frame (320, 818) about a main frame axis (810) and configured to move between an operational position and a stowed position;
wherein the wing frame section (322, 324, 816) is configured to move upwardly and inwardly about the axis (810) and relative to the main frame (320, 818) when moving from the operational position to the stowed position.

2. The agricultural implement (100, 300) of claim 1, further comprising a coupling mechanism (348, 800), wherein the coupling mechanism (348, 800) is coupled to the main frame (320, 818) and the wing frame section (322, 324, 816) and the coupling mechanism (348, 800) is pivotally coupled to the main frame (320, 818) to selectively pivot about the main frame axis (810) relative to the main frame (320, 818).

3. The agricultural implement (100, 300) of claim 2, further comprising an actuator (350, 354, 854) coupled to the main frame (320, 818) on a first end and to the coupling mechanism (348, 800) on a second end, the actuator (350, 354, 854) configured to move the wing frame section (322, 324, 816) upwardly and inwardly relative to the main frame (320, 818) when the wing frame section (322, 324, 816) transitions from the operational position to the stowed position, and the actuator (350, 354, 854) is configured to move the wing frame section (322, 324, 816) downwardly and outwardly relative to the main frame (320, 818) when the wing frame section (322, 324, 816) transitions from the stowed position to the operational position.

4. The agricultural implement (100, 300) of one of the claims 1 to 3, wherein the main frame axis (810) is offset relative to the ground plane and a vertical plane.

5. The agricultural implement (100, 300) of one of the claims 1 to 4, further comprising:
a second wing frame section (322, 324, 816) pivotally coupled to the main frame (320, 818) about a second main frame axis (810) and configured to move between the operational and stowed position; and
wherein the second wing frame section (322, 324, 816) is configured to move upwardly and inwardly about the main frame axis (810) and relative to the main frame (320, 818) when moving from the operational position to the stowed position.

6. The agricultural implement (100, 300) of one of the claims 1 to 5, wherein the wing frame section (322, 324, 816) is selectively transitionable between being moveably coupled to the coupling mechanism (348, 800) about a wing frame axis (812), and being fixedly coupled to the coupling mechanism (348, 800).

7. The agricultural implement (100, 300) of claim 6, further comprising an arm (814) configured to selectively couple the wing frame section (322, 324, 816) to a first coupling section (802), the arm (814) limiting movement of the wing frame section (322, 324, 816) about the wing frame axis (812).

8. The agricultural implement (100, 300) of claim 7, wherein the arm (814) is coupled to the wing frame section (322, 324, 816) via a first pin and a second pin;
wherein when both the first pin and second pin are coupled to the wing frame section (322, 324, 816), the wing frame section (322, 324, 816) is prevented from moving about the wing frame axis (812);
wherein when the first pin is coupled to the wing frame section (322, 324, 816) and the second pin is not coupled to the wing frame section (322, 324, 816), the wing frame is moveable about the wing frame axis (812) within a limited range.

9. The agricultural implement (100, 300) of one of the claims 2 to 8, wherein the actuator (350, 354, 854) is coupled to one or more of the main frame (320, 818) and the coupling mechanism (348, 800) via a ball joint.

10. The agricultural implement (100, 300) of claim **1,** further comprising a locking mechanism (854) configured to transition between a locked position and an unlocked position;
wherein the locking mechanism (854) locks the wing frame section (322, 324, 816) in the stowed position when the wing frame section (322, 324, 816) is in the stowed position and the locking mechanism (854) is in the locked position;
wherein the wing assembly is moveable to the operational position when the wing frame section (322, 324, 816) is in the stowed position and the locking mechanism (854) is in the unlocked position.
